# EUROPEAN PATENT APPLICATION

(11) **EP 4 517 524 A1**
(43) Date of publication of application: **05.03.2025**
(21) Application number: 23465531.4
(22) Date of filing: 31.08.2023
(51) Int. Cl.: G06F 9/48, G06F 9/50

(54) **METHOD FOR INFRASTRUCTURE-AS-CODE MIGRATION**

(71) Applicant: Siemens Aktiengesellschaft, 80333 München (DE)
(72) Inventor: COMAN, Andrei Laurentiu, 500256 Brasov (RO); MARINCAS, Maria Valentina, 500147 Brasov (RO); SOLCA, Robert Nicolae, 500338 Brasov (RO)
(74) Representative: Fierascu, Cosmina-Catrinel

(57) **Abstract**

The invention describes a method of migrating infrastructure-as-code script from a first environment to a second environment, comprising:receiving a first infrastructure-as-code script from the first environment, receiving a type of the second environment, based on the type of the second environment, receiving a set of mappings, each mapping comprising a first object associated with the first environment and a second object associated with the second environment, generating a second infrastructure-as-code script for the second environment by performing, for each mapping of the set of mappings, a replacement operation of the first object of the mapping in the first script with the second object of the mapping.

## Description

The invention relates to methods of migration of existing infrastructure-as-code for a software application to a different cloud provider environment or to an on-premise environment.

Infrastructure-as-code (laC) is the process of managing and provisioning computer data centers through machine-readable definition files, usually in the form of scripts.

The infrastructure managed by this process comprises the resources (physical equipment, virtual machines, etc.) and associated configuration.

A software application architecture is dependent on the underlying infrastructure.

Architectural change in software application, especially when caused by migration to a different environment, is a cumbersome and time-consuming process. The amount of manual work to achieve this goal can often be understated and the actual time-to-market can be much longer than initially thought. The variety of tools and services to choose from usually involves a lot of research and trial-and-error attempts.

At the present, the migration of infrastructure-as-code scripts is a manual process.

Certain helper tools are available (for example Amazon Web Services Elastic Cloud Compute to Azure Resource Management Virtual Machines and vice-versa), but only for a subset of Cloud Services, and even those take into consideration mostly the content of the virtual machine rather than the infrastructure around it.

The aim of the present invention is to provide a method for automatic migration of complete infrastructure-as-code script between any two different environments.

According to a first aspect of the present invention there is provided a method of migrating infrastructure-as-code script from a first environment to a second environment, comprising the following steps:
receiving a first infrastructure-as-code script from the first environment,
receiving a type of the second environment,
based on the type of the second environment, receiving a set of mappings, each
mapping comprising a first object associated with the first environment and a second object associated with the second environment,
generating a second infrastructure-as-code script for the second environment by
performing, for each mapping of the set of mappings, a replacement operation of the first object of the mapping in the first script with the second object of the mapping.

Preferably, the first object of the mapping is a regular expression pattern, the second object of the mapping is a replacement pattern, and the replacement operation is performed using standard regular expression procedures.

In a preferred embodiment, freely combinable with the previous ones, the mapping further comprises at least one optimization parameter, and generating the second infrastructure-as-code script comprises grouping the mappings by the first object, selecting the mapping with the highest optimization parameter value in each group, and performing the replacement operation for each of the selected mappings.

More preferably, the optimization parameter is one of: environment independence level, optimization level to the second environment.

In a yet another preferred embodiment, freely combinable with the previous ones, the first environment is an environment of a first cloud provider and the second environment is an environment of a second cloud provider.

In a yet another preferred embodiment, freely combinable with the previous ones, the first environment is a cloud provider environment and the second environment is an on-premise environment.

In a yet another preferred embodiment, freely combinable with the previous ones, the first environment is an on-premise environment and the second environment is a cloud provider environment.

In a further aspect, the invention relates to a system for migrating infrastructure-as-code script from a first environment to a second environment, comprising:
means for receiving a first infrastructure-as-code script from the first environment,
means for receiving a type of the second environment,
means for receiving a set of mappings, each mapping comprising a first object associated with the first environment and a second object associated with the second environment,
means for generating a second infrastructure-as-code script for the second environment by performing, for each mapping of the set of mappings, a replacement operation of the first object of the mapping in the first script with the second object of the mapping.

Further features of the present invention will be apparent from the following description of exemplary embodiments with reference to the attached drawings.
Fig. 1 is a flowchart illustrating the method of migrating infrastructure-as-code script between any two different environments.
Fig. 2 is a block diagram illustrating the logical components of a system according to one embodiment of the invention
Fig. 3 is a block diagram illustrating the hardware components of a computer being part of the system according to one embodiment of the invention

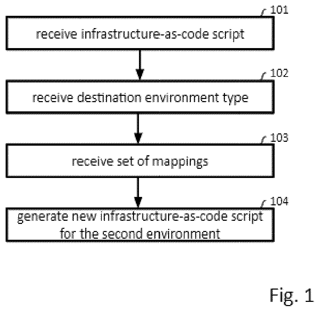

As presented in Fig. 1, a method of migrating infrastructure-as-code script starts with step 101, where an infrastructure-as-code script is received from a source environment. The existing environment may be one of cloud environments, or an on-premise environment.

In step 102, a type of the destination environment is received. A destination environment is an environment where the infrastructure-as-code script will be migrated to. It may be one of cloud environments, or an on-premise environment.

Then, in step 103, a set of mappings is received. Each mapping in the set includes a source object associated with the source environment and a destination object associated with the destination environment. An object may represent a cloud service, a service functionality or any other configurable element, and it may be defined as a deserialized expansion of its configuration. Each mapping may additionally include one or more optimization parameters. One example of optimization parameter is environment independence level, which is used to reduce the lock-in effect. It can be also defined as compatibility weight, meaning the percentage of compatibility between all the environments. Another example of optimization parameter is optimization level to the destination environment, which is used for the best fit to the environment offering.

Finally, in step 104, a new infrastructure-as-code script for the destination environment is generated. The new script is generated by various input and output connectors, which perform, for each mapping of the set of mappings, a replacement operation of the first object of the mapping in the script with the second object of the mapping.

The replacement operation may be performed using standard regular expression procedures. The standard regular expression procedures are widely known (a summary is described in Wikipedia:
https://en.wikipedia.org/wiki/Regular expression). In case when regular expression procedures are used, the source object of the mapping is a regular expression pattern, which may contain one or more subexpressions, and the destination object of the mapping is a replacement pattern, which may contain backreferences to the abovementioned subexpressions.

When the mappings include one or more optimization parameters, there are one-to-many mappings between source object and destination objects. In such case, the mappings are first grouped by the source object, then in each group the mapping with the highest value or highest weighted average of one or more optimization parameters is selected, and then the replacement operation is performed for each of the selected mappings.

All mappings may be versioned, based on regular updates from the various APIs made available by the cloud providers and/or on-premise systems, to mitigate breaking changes in the existing mappings.

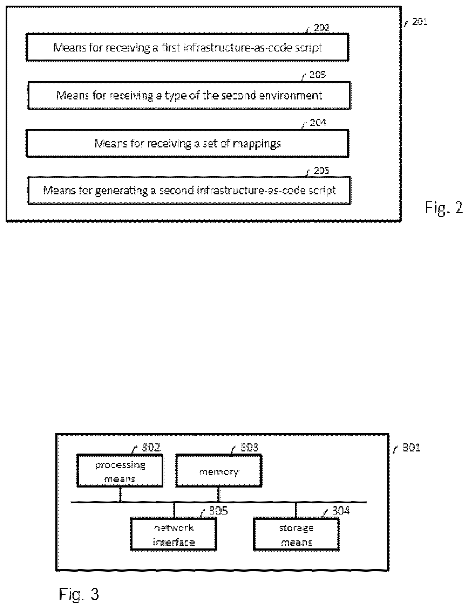

Fig. 2 illustrates the logical components of a system for migrating infrastructure-as-code script from a first environment to a second environment, according to one embodiment of the invention. The system 201 includes means 202 for receiving a first infrastructure-as-code script, means 203 for receiving a type of the second environment, means 204 for receiving a set of mappings, and means 205 for generating a second infrastructure-as-code script.

Means 202-205 may be computer programs running on a computer. Some of the means 202-205 may run on one or more other computers connected via one or more network interfaces.

In a typical use case, means 202 is used for receiving a first infrastructure-as-code script. The script may be received from a network interface, read from a file stored in a computer storage or entered by a user. Means 202 also determines the type of the first environment based on the received script.

Means 203 is used for receiving a type of the second environment. The type of the second environment may be received from a network interface, read from a file stored in a computer storage or entered by a user.

Means 204 is used for receiving a set of mappings. The mappings can be received from a network interface or can be read from a database in computer storage. In case when the set of mappings includes mappings for multiple environments, means 204 disregards the mappings for other environments than the first and the second environment.

Means 205 is used for generating a second infrastructure-as-code script for the second environment. The script is generated by performing, for each mapping of the set of mappings, a replacement operation of the first object of the mapping in the first script with the second object of the mapping.

The script generated by means 205 may be sent via network interface, stored in a file in a computer storage or displayed to a user.

Fig. 3 illustrates the hardware components of a computer being part of the system according to one embodiment of the invention. A computer 301, in the most general form includes a processing means 302, which typically is CPU and/or GPU, a memory 303, which is typically RAM, and a storage means 304, which is typically hard disk. It may also include network interface 305. Computer 301 may be a standalone PC, workstation, server, or a virtual server in a cloud environment.

Although particular embodiments have been disclosed herein in detail, they are done by way of example for purposes of illustration only, and is not intended to be limiting with respect to the scope of the appended claims that follow.

Independent of the grammatical term usage, individuals with male, female or other gender identities are included within the term.

## Claims

1. A method of migrating infrastructure-as-code script from a first environment to a second environment, comprising:
receiving a first infrastructure-as-code script from the first environment,
receiving a type of the second environment,
based on the type of the second environment, receiving a set of mappings, each mapping comprising a first object associated with the first environment and a second object associated with the second environment,
generating a second infrastructure-as-code script for the second environment by performing, for each mapping of the set of mappings, a replacement operation of the first object of the mapping in the first script with the second object of the mapping.

2. The method according to claim 1, wherein the first object of the mapping is a regular expression pattern and the second object of the mapping is a replacement pattern, and wherein the replacement operation is performed using standard regular expression procedures.

3. The method according to claim 1 or 2, wherein the mapping further comprises at least one optimization parameter, and wherein generating the second infrastructure-as-code script comprises grouping the mappings by the first object, selecting the mapping with the highest optimization parameter value in each group, and performing the replacement operation for each of the selected mappings.

4. The method according to claim 3, wherein optimization parameter is one of: environment independence level, optimization level to the second environment.

5. The method according to any of the preceding claims, wherein the first environment is an environment of a first cloud provider and the second environment is an environment of a second cloud provider.

6. The method according to any of the preceding claims, wherein the first environment is a cloud provider environment and the second environment is an on-premise environment.

7. The method according to any of the preceding claims, wherein the first environment is an on-premise environment and the second environment is a cloud provider environment.

8. A system for migrating infrastructure-as-code script from a first environment to a second environment, comprising:
means for receiving a first infrastructure-as-code script from the first environment,
means for receiving a type of the second environment,
means for receiving, based on the type of the second environment, a set of mappings, each mapping comprising a first object associated with the first environment and a second object associated with the second environment,
means for generating a second infrastructure-as-code script for the second environment by performing, for each mapping of the set of mappings, a replacement operation of the first object of the mapping in the first script with the second object of the mapping.
